**Europäisches Patentamt**

**European Patent Office**

**Office européen des brevets**

(19)

(11) Veröffentlichungsnummer: **0 070 399**
**B1**

(12) **EUROPÄISCHE PATENTSCHRIFT**

(45) Veröffentlichungstag der Patentschrift:
03.09.86

(51) Int. Cl.⁴: **B 65 G 47/24**

(21) Anmeldenummer: **82105438.4**

(22) Anmeldetag: **22.06.82**

(54) Dreheinrichtung für Stück- und Sackgut.

(30) Priorität: **22.07.81  DE 3128917**

(43) Veröffentlichungstag der Anmeldung:
**26.01.83 Patentblatt 83/4**

(45) Bekanntmachung des Hinweises auf die Patenterteilung:
**03.09.86 Patentblatt 86/36**

(84) Benannte Vertragsstaaten:
**FR GB IT**

(56) Entgegenhaltungen:
**DE-A-2 947 568**
**DE-A-2 947 568**
**DE-B-1 239 241**
**US-A-3 750 815**

(73) Patentinhaber: **Weykam, Gottfried J.,**
**Hesslerstrasse 14, D-4700 Hamm 1 (DE)**

(72) Erfinder: **Hessling, Heinz Wilhelm, Oststrasse 41,**
**D-4720 Beckum (DE)**
Erfinder: **Weykam, Gottfried J., Dr.,**
**Hesslerstrasse 14, D-4700 Hamm 1 (DE)**

(74) Vertreter: **Patentanwälte Schulze Horn und**
**Hoffmeister, Goldstrasse 36, D-4400 Münster (DE)**

## Beschreibung

Die Erfindung betrifft eine Dreheinrichtung für Stück- und Sackgut, die zwischen Teilstrecken von Transportmitteln wie Transportbändern, Rollenstraßen o. ä. angeordnet ist und ein um die vertikale Achse drehbares Drehkreuz oder einen Drehteller mit Aussparungen für Förderer (Rollen oder äquivalente) aufweist, wobei Drehkreuz oder -teller und Förderer relativ zueinander höhenverschiebbar sind (DE-A-2 947 568).

Es ist bekannt, daß Stückgüter oder von Packmaschinen gefüllte Säcke mittels Transportbändern zu Beladestellen gefördert werden. Zur Bildung von Kreuzverbänden auf Paletten oder Lastkraftwagen muß ein Teil der Säcke oder Stücke auf dem Transportweg um 90° gedreht werden.

Es sind Einrichtungen zum Drehen von Stückgut oder Säcken bekannt, wobei insbesondere die nach der DE-B 1 239 241, der US-A 3 750 815 und der DE-A 2 947 568 zu nennen sind.

In der DE-B 1 239 241 ist ein Drehteller beschrieben, der durch eine Achse relativ geringen Durchmessers sowohl vertikal bewegt als auch gedreht wird (siehe Figuren 3 und 5, Bezugszeichen 11). Bei der Beschleunigung und Abbremsung kommt es vor allem bei schweren Gütern und/oder bei raschem Betriebsablauf zu sehr großen Spannungs- und Torsionskräften in der betreffenden Achse und damit zu vorzeitigem Verschleiß oder Bruch. Ein weiterer wesentlicher Nachteil ist die starke Belastung der Verbindung von Achse und Drehteller bei einseitiger Belastung des Tellers durch z.B. nicht zentral aufliegende Güter oder Gegenstände mit unsymmetrischer Massenverteilung.

In der US-A-3 750 815 ist zwar ein Drehteller beschrieben, der von einer Hohlachse größeren Durchmessers unterstützt ist, doch zeigt diese Drehvorrichtung einen großflächigen Bereich im Zentrum des Drehtellers, der keine Förderer (Rollen) aufweist. Die zu transportierenden Güter werden während des Einlaufens auf die Drehvorrichtung und während des Ablaufens von der Drehvorrichtung somit nicht auf ihrer gesamten Unterfläche unterstützt, wie es auf den anderen Teilstrecken der Transportmittel der Fall ist. Besonders bei Gütern mit einer nicht-starren Unterfläche wie z.B. Papiersäcken, kann es leicht zu Beschädigungen durch die mangelhafte Unterstützung der Unterfläche im Bereich der Drehvorrichtung kommen.

In der gattungsbildenden DE-A-2 947 568 ist ein heb- und senkbares Drehkreuz beschrieben, das in einer Rollen- oder Förderbandstrecke angeordnet ist. Durch die kreuzförmige Ausgestaltung des Drehtellers ergibt sich eine über die gesamte Breite des Transportweges reichende Unterbrechung der Fördermittel, was wegen der fehlenden Unterstützung des Transportgutes zu Schäden an diesem führen kann.

Es stellt sich daher die Aufgabe, eine Drehvorrichtung zu schaffen, die die genannten Nachteile vermeidet und einen niedrigen mechanischen Aufwand und geringen Kraft- und Energiebedarf aufweist, die eine hohe Stabilität bei gleichzeitig zügigem Betriebsablauf besitzt und die die Güter vollflächig mit Förderern (Rollen) unterstützt.

Diese Aufgabe wird gemäß der Erfindung durch eine Drehvorrichtung der eingangs genannten Art nach dem kennzeichnenden Teil des einzigen Patentanspruches gelöst.

Dadurch, daß für die Drehung des Gutes die Förderer (Rollen) unter den Drehteller abgesenkt werden, wird erreicht, daß der Drehteller nur eine Drehbewegung auszuführen hat, bei der er seine Höhenlage beibehält. Nach dem Drehen des Gutes ist dieses lediglich über eine sehr geringe Höhendistanz von der Förderern (Rollen) anzuheben. Hierdurch wird der mechanische Aufwand wesentlich verringert, da jede Einheit (Drehteller bzw. Förderer) nur eine Bewegung auszuführen hat, was die Betriebssicherheit deutlich erhöht. Außerdem ist die aufzuwendende Kraft und damit der Energieverbrauch gering.

Durch eine Unterstützung des Drehtellers auf einer konzentrisch um den Tellermittelpunkt verlaufenden Kreisringfläche durch eine Hohlachse wird eine wesentlich bessere Aufnahme von Drehmomenten durch unsymmetrische Belastung und Winkelbeschleunigungen des Drehtellers erreicht,

Durch die Anordnung eines Förderers im Zentrum der Hohlachse und damit im Zentrum des Drehkreuzes wird gleichzeitig das zu drehende Gut auf seiner gesamten Unterfläche gleichmäßig von Förderern unterstützt, womit eine Beschädigungsgefahr für die Güter, insbesondere Sackgut in Papiersäcken, weitgehend ausgeschlossen ist.

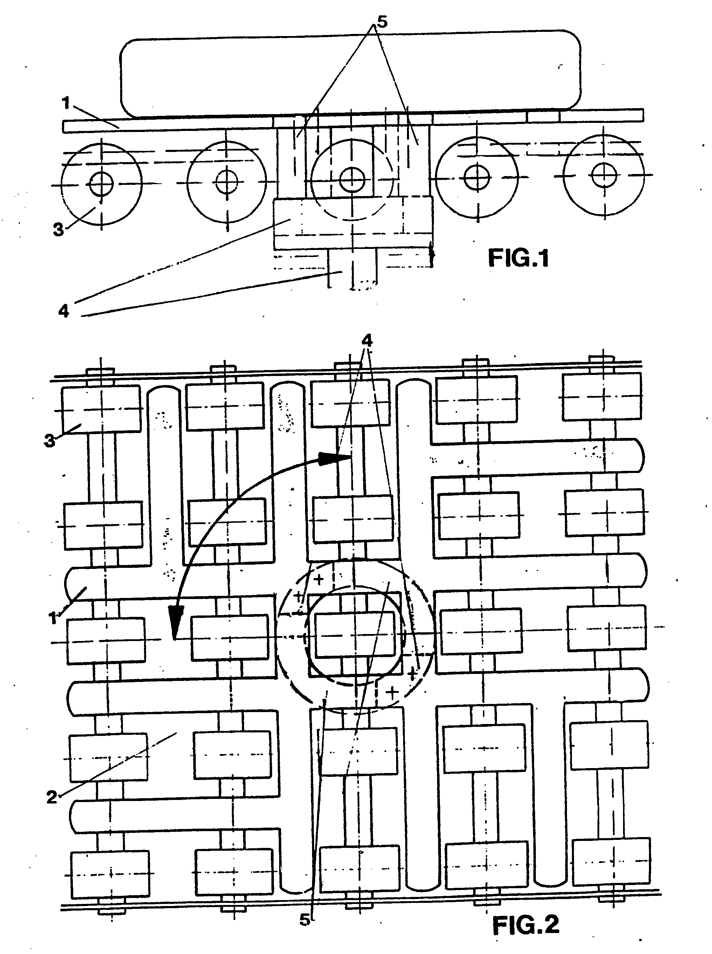

Ein Ausführungsbeispiel der erfindungsgemäßen Dreheinrichtung ist in den Figuren 1 und 2 dargestellt. Die Dreheinrichtung, bestehend aus einem Drehkreuz oder einem Drehteller 1, ist zwischen zubringenden und abführenden Transportmittel wie Rollenstraßen, Transportbändern oder äquivalenten Transporteinrichtungen angeordnet. Sie enthält Aussparungen 2 zur Aufnahme von angetriebenen oder nicht angetriebenen Förderern 3 sowie Rollen oder Keilriemen oder äquivalenten Einrichtungen und ermöglicht Drehbewegungen des Drehtellers nach Senken der im Drehbereich angeordneten Förderer.

Die Neuerung in dieser Anlage, die die erforderliche Drehung des Packgutes um 90° bewirkt, besteht in dem Drehkreuz oder Drehteller auf einer in ihrem oberen Teil hohlen Achse 4 mit segmentären Aussparungen mit im Drehbereich angeordneten Förderern 3.

Die Drehung des Gutes erfolgt, nachdem die zuführenden Transportmittel dieses in die richtige Position über der Dreheinrichtung gebracht haben und die im Drehbereich befindlichen Förderer abgesenkt worden sind. Nach der Drehung kehren die Förderer in ihre Ausgangsstellung zurück und das gedrehte Gut wird aus dem Drehbereich abtransportiert.

**Patentanspruch**

1. Dreheinrichtung für Stück- und Sackgut, die zwischen Teilstrecken von Transportmitteln wie Transportbändern, Rollenstraße o. ä. angeordnet ist und ein um eine vertikale Achse drehbares Drehkreuz oder einen Drehteller (1) mit Aussparungen (2) für Förderer (3) (Rollen oder deren Äquivalente) aufweist, wobei Drehkreuz oder -teller und Förderer relativ zueinander höhenverschiebbar sind,
dadurch gekennzeichnet,
- daß die im Bereich des Drehkreuzes oder -tellers angeordneten Förderer in vertikaler Richtung beweglich sind,
- daß das Drehkreuz bzw. der Drehteller eine feste Höhenlage aufweist,
- daß der obere Teil der das Drehkreuz bzw. den Drehteller tragenden Achse (4) als Hohlachse mit segmentären Ausschnitten (5) ausgebildet ist und
- daß eine der die Förderer tragenden, senkrecht zur Achse des Drehtellers verlaufenden Achsen durch die segmentären Ausschnitte führt und im Zentrum der Hohlachse und damit im Zentrum des Drehkreuzes oder -tellers einen Förderer trägt.

**Claim**

1. A rotating mechanism for piece goods and bagged goods, the mechanism being positioned between path sections of conveyor means, such as conveyor belts, a roller line or the like, and including a spider or turntable (1) which is rotatable about a vertical axis and provided with recesses (2) for conveyor means (3)(rollers or their equivalents), with the spider or turntable and the conveyor means being vertically movable relative to each other,
characterized in
- that the conveyor means positioned in the vicinity of the spider or turntable are movalbe in the vertical direction;
- that the spider or turntable assumes a fixed vertical level position;
- that the upper portion of the axle or shaft (4) supporting the spider or turntable is formed as a hollow shaft with segmental cutouts (5); and
- that one of the axles or shafts bearing the conveyor means and extending perpendicular to the axle or shaft of the turntable, passes through the segmental cutouts and carries one conveyor means in the center of the hallow shaft and, thus, in the center of the spider or turntable.

**Revendication**

1. Dispositif pour tourner des colis ou de la matière ensachée, ce dispositif étant agencé entre des sections de voie de moyens de transports tels que bandes transporteuses, chemins à rouleaux ou analogües, et présentant un tourniquet ou un plateau tournant (1), capable de tourner autour d'un axe vertical, avec des ajours (2) pour des transporteurs (3) (rouleaux ou leurs équivalents), le tourniquet ou plateau tournant et les transporteurs étant mobiles en hauteur, les uns par rapport aux autres,
caractérisé en ce que
- les transporteurs agencés dans la région du tourniquet ou du plateau sont mobiles en direction verticale,
- le tourniquet ou le plateau tournant présente une position de hauteur fixe,
- la partie supérieure de l'axe (4) portant le tourniquet ou le plateau tournant est aménagée en tant qu'axe creux avec des portions segmentaires (5), et
- l'un des axes qui passent perpendiculairement à l'axé du plateau tournant et qui portent les transporteurs passe par les découpures segmentaires et porte, au centre de l'axe creux donc au centre du tourniquet ou du plateau, un transporteur.

FIG.1

FIG.2